# EUROPEAN PATENT SPECIFICATION

(11) **EP 3 336 992 B1**
(45) Date of publication and mention of the grant of the patent: **24.02.2021**
(21) Application number: 16204006.7
(22) Date of filing: 14.12.2016
(51) Int. Cl.: H02G 15/06, H02G 15/18

(54) **PORT ENTRY DEVICE**
PORTEINGANGSVORRICHTUNG
DISPOSITIF D'ENTRÉE DE PORT

(43) Date of publication of application: 20.06.2018
(73) Proprietor: Corning Research & Development Corporation, Corning, New York 14831 (US)
(72) Inventor: Bund, Christine Brigitte, 42111 Wuppertal (DE); Hajok, Johann Georg, 44795 Bochum (DE)
(74) Representative: Reeve, Nicholas Edward

(56) References cited:
- EP-A1- 2 897 233
- WO-A1-2005/081375
- US-A1- 2007 007 038
- US-A1- 2012 048 616
- US-B1- 7 712 970

## Description

This disclosure relates to port entry devices that facilitate a sealed entry of telecommunication cables into closures.

Cables, such as telecommunication cables and electrical power distribution cables, are ubiquitous and used for distributing electrical power and all kind of data across networks. The majority of cables are electrically conductive cables (typically copper), although the use of optical fiber cables for data transmission is growing rapidly in telecommunication systems as larger and larger amounts of data are transmitted. As cables are routed across power or data networks, it is necessary to open or splice the cable in certain locations so that power or data may be distributed to other cables or "branches" of the network.

At each point where the cable is opened, it is necessary to provide some type of closure to protect the exposed interior of the cable. Commonly, such a closure has one or more ports through which cables can enter and/or exit the closure. At each port it is often desirable or necessary to provide a seal around the cable to prevent the ingress of moisture, dust, insects, and the like into the closure. Amongst other methods, port entry devices have been developed which can be mounted on cables and which provide sealing between the cable sheath and the wall of the port, when placed in the port.

An example of a port entry device is described in the European Patent Application EP 0978745 A1. The device is fitted to a cable and secured to its strength members before the cable is inserted into a chamber or container. The outer sheath of the cable is further secured directly on the watertight inlet device and upstream from its sealing mechanism. The watertight inlet device is then received by being threaded into the chamber or container and locked in it merely by keying.

The U.S. patent application US 2007/0007038 A1 refers to a sealing member comprising a body having an elastomeric interior portion and a rigid exterior portion. A passage extends through the elastomeric interior portion to receive a cable therein. The elastomeric interior portion is configured for sealing engagement with the cable, while the rigid exterior portion is configured for sealing engagement with an entry port of a closure. The sealing member could be manufactured using a co-injection molding process that utilizes two different materials to provide the desired properties for the elastomeric interior portion and the rigid external portion, where there is no well-defined phase boundary between the two different materials.

The European Patent EP 2647096 B1 mentions a strain relief device including a sealing member, which can be formed by a two-step injection molding process. First a rigid material is used to form a tubular body, followed by the injection of an elastomeric material to form the sealing member.

EP 2 897 233 A1 relates to an enclosure for a cable to an apparatus interconnection which enables a sealing compression from several directions over the cable. US 2012/048616 A1 relates to a grommet assembly for holding, sealing and/or protecting one or more wires of a wire harness as they pass through an opening in a panel. WO 2005/081375 A1 shows a cable entry device for providing sealing in a space between a cable and a surrounding material.

Known co-molded seals are designed for cables or ports of precisely defined (outer or inner) diameters. They do not cope well with cables or ports of slightly different diameters or irregular cross sections. It is an object of the present disclosure to attempt to address this shortcoming.

A port entry device for mounting on a telecommunication cable and adapted to be received in a port of a closure to facilitate sealed entry of the cable through the port into the closure is specified in claim 1.

The present disclosure provides, according to the invention, a port entry device for mounting on a telecommunication cable and adapted to be received in a port of a closure, to facilitate sealed entry of the cable through the port into the closure, the port entry device forming an elongate interior passageway for receiving a section of the cable, the passageway extending longitudinally in an axial direction between a first end portion of the port entry device and a second end portion of the port entry device, with radial directions being directions orthogonal to the axial direction,
wherein the port entry device comprises
a) a rigid structural portion having a seal-supporting surface, and
b) a resilient first sealing portion for sealing a gap between the structural portion and a surface of the cable,
   - formed as a single piece with the structural portion,
   - arranged on the seal-supporting surface of the structural portion,
   - extending radially between the seal-supporting surface and a contact edge of the first sealing portion, located radially inward from the seal-supporting surface, at which contact edge the first sealing portion can sealingly contact the surface of the cable, characterized in that the thickness of the first sealing portion decreases from the seal-supporting surface to the contact edge.

The decreasing thickness of the resilient sealing portion (i.e. the first sealing portion, unless indicated otherwise), from the seal-supporting surface to the contact edge, is also referred to herein as "tapering" of the sealing portion, and a sealing portion having this property is referred to herein as a "tapered sealing portion".

The fact that the sealing portion is formed as a single piece with the structural portion facilitates better and more reliable sealing of the port entry device, because there is no connection or attachment of the sealing portion to the structural portion that might fail.

Tapering of the sealing portion, or generally of a sealing portion according to the present disclosure, provides for it to be thinner at the contact edge than at the seal-supporting surface. While the greater thickness at the seal-supporting surface facilitates reliable anchoring of the sealing portion on the structural portion, the reduced thickness at the contact edge makes that contact edge more conformable, so that it can keep closer to the cable surface (or port surface), even if that cable surface (or port surface) is irregular in cross section, or if the outer diameter of the cable (or inner diameter of the port) is slightly smaller or larger than the diameter for which the sealing portion was designed. A sealing portion that is tapered and therefore conforms closer to the cable surface is likely to provide a more reliable seal.

Port entry devices of the present disclosure facilitate a sealed entry of a cable into a closure. In this disclosure, "entry of the cable" does not refer to a dynamic process, but describes the fact that a first axial section of the cable is outside the closure, and a second axial section of the cable is inside the closure. The second axial section may be very short. Any axial cable section which is on the side of the sealing portion of the port entry device which is oriented towards the inside of the closure is considered to be inside the closure. A sealed entry of the cable refers to the fact that moisture, dust, vapours, bugs and the like are to be prevented, by a sealing mechanism, from entering the closure.

A port, in the context of this disclosure, refers to an opening formed in the closure, e.g. in an outer wall of the closure, through which opening a section of the cable can extend such, that a first axial section of the cable is outside the closure, and a second axial section of the cable is inside the closure. Many ports are delimited by port walls forming a tubular opening between the interior of the closure and the outside. A port entry device may, for example, be received in a port and engage with the port walls. Thereby the port entry device may engage with the port and/or be fixable in the port. Certain axial cross sections of a port, e.g. hexagonal cross sections, may be shaped such as to prevent rotation of the port entry device in the port.

Port entry devices according to the present disclosure are suitable for being mounted on a telecommunication cable. They may be, for example, arranged around the cable, or, more specifically, around an axial section of the cable. The port entry devices form an elongate interior passageway for receiving a section, i.e. an axial section, of the cable. Generally, the cross section of the passageway may be geometrically similar to the cross section of the cable which it is to receive. Although most cables are of a circular cross section, some cables have elliptical or flat or 8-shaped cross sections. Correspondingly, the passageway may have a circular cross section, an elliptical or a flat or an 8-shaped cross section.

Whatever the inner and outer shape and whatever the length of the port entry devices, the long direction, i.e. the "cable direction", of the passageway defines axial directions of the port entry devices. Radial directions are directions orthogonal to the axial directions.

The passageway extends in an axial direction between a first end portion and a second end portion of the port entry device. The cable thus "enters" the passageway at the first end portion and "leaves" the passageway at the second end portion. Most cables are guided straight into closures through port entry devices. The passageway of a port entry device according to the present disclosure may have a straight shape, e.g. a cylindrical shape, where the symmetry axis of the cylinder is collinear with the axial direction of the cable.

Port entry devices according to the present disclosure have a rigid structural portion which provides structural integrity and mechanical stability to the port entry devices. The structural portion may form the interior passageway, e.g. by providing a free space extending between the first end portion and the second end portion of a port entry device, in which the cable can be received.

Generally, where a port entry device is arranged around a cable, a sealed entry through the port requires a first sealing mechanism for sealing the gap between the cable surface and an inner surface of the port entry device, and a second sealing mechanism for sealing the gap between a surface of the port entry device and a surface of the port.

For the purpose of sealing the gap between the cable surface and an inner surface of the port entry device according to a first aspect of the present disclosure, the rigid structural portion has a seal-supporting surface, on which a resilient sealing portion is arranged. In certain embodiments, the seal-supporting surface is an inner surface of the structural portion. In some of these embodiments, the seal-supporting surface is an inner surface of the structural portion facing the interior passageway. Such geometries may provide for a particularly small sealing portion, because an inner surface is generally closer to the cable, so the sealing portion does not need to bridge much space for sealing.

In other embodiments, the seal-supporting surface is flat and its surface normal is oriented parallel to axial directions. In some of these embodiments, the seal-supporting surface is an interior surface of the structural portion, i.e. one that is not externally accessible, or an outer surface of the structural portion, i.e. one that is externally accessible. Such geometries may allow to accommodate the sealing portion in a port entry device where space in radial direction is limited, e.g. in particularly "slim" port entry devices with minimal extension in radial directions.

The seal-supporting surface is a surface of the rigid structural portion. It may, for example, be an inner perimeter surface. It may have different shapes and orientations, however it is considered advantageous that it follows the circumferential outer contour of the cable which is to be received in the passageway, leaving a small distance, such as 1-5 mm distance, between the cable contour and the seal-supporting surface. This way, the radial gap between the outer surface of the cable and the seal-supporting surface remains small and only a small sealing portion is required to seal this gap.

A suitable shape of the seal-supporting surface may be, for example, the shape of an inner surface of a ring or an inner surface of a short a cylinder. Alternatively, its shape could be the shape of a inwardly-tapered annular ridge. Generally, an annular shape appears advantageous, if the cable has a circular cross section. An elliptical shape may be advantageous where the cable has an elliptical cross section, etc. Generally, however, the shape of the seal-supporting surface is not determined by the cross section of the cable. The seal-supporting surface may, for example, have a rectangular shape, while the cable to be received has a circular cross section. In such cases, the sealing portion may be formed suitably to provide a geometric transition between the seal-supporting surface and the outer cable surface.

In certain embodiments of the port entry devices of the present disclosure, the seal-supporting surface is located at the axial position of the port entry device where the interior passageway has its smallest diameter. This arrangement may allow to have a smaller sealing portion to bridge the gap between the structural portion and the cable surface. However, in other embodiments the seal-supporting surface is located at a different axial position of the port entry device.

A port entry device according to the invention has a resilient sealing portion for sealing the gap between the structural portion of the port entry device and the cable, i.e. an outer surface of the cable, when mounted on the cable. The sealing portion is resilient, so that it can conform better to the surface of the cable and may compensate changes in the outer cable diameter, for example those caused by temperature variations or those appearing when the cable moves axially relative to the sealing portion.

A resilient (or synonymously, an elastic) sealing portion is a sealing portion that can be deformed, e.g. bent, compressed, elongated, kinked, or folded, and when released strives to return into its original shape.

For sealing against an inner surface of a port, a resilient sealing portion that is slightly larger than an inner surface of a port can be deformed when the port entry device is inserted into the port and can contact the inner surface of the port for sealing, after insertion. As opposed to that, a rigid, non-resilient sealing portion, slightly larger than an inner surface of a port, cannot be deformed for insertion into the port.

In certain embodiments, the sealing portion is rotationally symmetric. In some of those embodiments, the seal-supporting surface has a circular shape, and the contact edge has a circular shape, too, and is arranged concentric with the seal-supporting surface.

According to the invention, the sealing portion is formed as a single piece with the structural portion, i.e. the sealing portion and the structural portion are formed as a single piece. Being formed as a single piece refers to these portions being manufactured as one piece, so that none of them ever existed separate from the other. Specifically, "being formed as a single piece" includes these portions being co-molded, co-extruded or cast as a single piece, as will be further detailed below. A benefit of the portions being formed as a single piece is that there is no interface between the sealing portion and the structural portion through which moisture or dust could potentially enter the closure. A further benefit is that the contact area of the sealing portion to the structural portion can be quite large, so that mechanical forces on the sealing portion can be transmitted to the structural portion with less risk of mechanical failure. Unlike in sealings using O-rings on the structural portion, the sealing portion cannot be displaced relative to the structural portion.

For a structural portion and a sealing portion formed as a single piece, the seal-supporting surface or a portion of it is the surface of the structural portion where the resilient sealing portion begins. Depending on the manufacturing method, there may be a transition zone between the rigid structural portion and the resilient sealing portion, for example originating from a mixture of materials in a co-molding process, where rigidity decreases and resilience increases, or vice versa. The more rigid side of this transition zone is considered to be part of the structural portion, while the more resilient side of the transition zone is considered to be part of the sealing portion. The "end" of the structural portion forms the seal-supporting surface.

The sealing portion extends in radial direction between the seal-supporting surface and a contact edge, at which contact edge it can sealingly contact the surface of the cable. The sealing portion thus extends, from the seal-supporting surface, radially inward, towards the central longitudinal axis of the interior passageway, far enough to be in sealing mechanical contact with the outer surface of the cable, when the port entry device is mounted around the cable. The sealing portion extends radially inward up to the contact edge. In certain embodiments of a port entry device according to this disclosure, the seal-supporting surface is an annular surface, and the contact edge of the sealing portion has a circular shape, so that the sealing portion may be a resilient circular membrane having a circular aperture in its centre.

In certain embodiments, a port entry device as described above further comprises a second resilient sealing portion for sealing the gap between the structural portion and the cable, wherein the second sealing portion is formed as a single piece with the structural portion, is arranged on the seal-supporting surface, spaced from the first resilient sealing portion in an axial direction, and extends radially between the seal-supporting surface and a second contact edge of the second sealing portion. The second contact edge is located radially inward from the seal-supporting surface. At the second contact edge the second sealing portion can sealingly contact the surface of the cable.

A port entry device having a second sealing portion with a second contact edge located radially inward from the seal-supporting surface forms a second, additional sealing element to seal the gap between the structural portion and the cable. A second sealing portion may provide a more effective sealing against the cable and/or redundancy in case of failure of the first sealing portion.

The second sealing portion may be shaped such that a parallel projection of the second contact edge onto a geometric plane orthogonal to an axial direction has a shape of a circle, an oval, an ellipse, a square, a rectangle, a diamond, a triangle or of a polygon.

In the first fundamental aspect of the disclosure (sealing against the cable), the contact edge is located radially inward from the seal-supporting surface. In some embodiments, the contact edge lies in a first geometric plane. In some embodiments, the seal-supporting surface is located in a second geometric plane. In some embodiments, the contact edge and the seal-supporting surface are arranged in one geometric plane. In other embodiments, they are arranged in different geometric planes, e.g. in parallel geometric planes. Port entry devices in which the contact edge is arranged in a geometric plane may be easier to manufacture. Also, such contact edges may be geometrically shorter, so that sealing between the sealing portion and the cable may be more reliable.

Where the contact edge lies in a geometric plane, a surface normal of the geometric plane may be oriented parallel to an axial direction. Alternatively, a surface normal of the geometric plane may form an angle of between 1° and 89° with an axial direction.

As mentioned above, a sealed entry through the port also requires a sealing mechanism for sealing the gap between a surface of the port entry device and a surface of the port. Where the port entry device, arranged around a cable, is inserted into the port, so that the port surrounds the port entry device, sealing is required between an outer surface of the port entry device and a surface (e.g. an inner surface or a surface oriented radially inward) of the port.

For that purpose, the present disclosure also provides, in a second fundamental aspect (sealing against the port), a port entry device for mounting on a telecommunication cable and adapted to be received in a port of a closure, to facilitate sealed entry of the cable through the port into the closure, the port entry device forming an elongate interior passageway for receiving a section of the cable, the passageway extending longitudinally in an axial direction between a first end portion of the port entry device and a second end portion of the port entry device, with radial directions being directions orthogonal to the axial direction,
wherein the port entry device comprises
a) a rigid structural portion having a seal-supporting surface, and
b) a resilient first sealing portion for sealing a gap between the structural portion and a surface of the port,
   - formed as a single piece with the structural portion,
   - arranged on the seal-supporting surface of the structural portion,
   - extending radially between the seal-supporting surface and a contact edge of the first sealing portion, located radially outward from the seal-supporting surface, at which contact edge the first sealing portion can sealingly contact the surface of the port, characterized in that the thickness of the first sealing portion decreases from the seal-supporting surface to the contact edge.

The port entry device according to the first fundamental aspect of this disclosure provides sealing against the cable, while the port entry device according to the second fundamental aspect of this disclosure sealing against the port. However, the concepts of a) the sealing portion and the structural portion being formed as a single piece, and b) the sealing portion being tapered from the seal-supporting surface towards the contact edge are identical in both devices. Therefore, the definitions above also apply to the following paragraphs, and the advantages described above for the cable-sealing port entry device are found in the port-sealing port entry device.

Also in the port-sealing port entry device, the fact that the sealing portion (i.e. the first sealing portion, unless indicated otherwise) is formed as a single piece with the structural portion facilitates better and more reliable sealing of the port entry device, because there is no connection or attachment that might fail.

Tapering of the sealing portion provides for it to be thinner at the contact edge than at the seal-supporting surface. While the greater thickness at the seal-supporting surface facilitates reliable interconnection between the structural portion and the sealing portion, the reduced thickness at the contact edge makes that contact edge more conformable, so that it can keep closer to the port surface, even if that port surface is irregular in cross section, or if the inner diameter of the port is slightly smaller or larger than the diameter for which the sealing portion was designed. A sealing portion that is tapered and therefore conforms closer to the port surface is likely to provide a more reliable seal.

For the purpose of sealing the gap between the port surface and an outer surface of the port entry device according to the second fundamental aspect of the present disclosure, the rigid structural portion has a seal-supporting surface, on which a resilient sealing portion is arranged. Generally, the resilient sealing portion can seal the gap between the structural portion and a surface of the port, when the port entry device is received in the port. In certain embodiments, the seal-supporting surface is an outer surface of the structural portion. In some of these embodiments, it is an outer surface of the structural portion facing away radially from the interior passageway.

In other embodiments, the seal-supporting surface is flat and its surface normal is oriented parallel to an axial direction. In those embodiments, the seal-supporting surface may be an interior surface of the structural portion, i.e. one that is not externally accessible, or an outer surface of the structural portion, i.e. one that is externally accessible. Such geometries may allow to accommodate the sealing portion in a port entry device where space in radial direction is limited, e.g. in particularly "slim" port entry devices with minimal extension in radial directions, which may be particularly suitable for use with narrow ports.

The seal-supporting surface is a surface of the rigid structural portion. It may have various shapes and orientations, however it is considered advantageous that it follows the circumferential inner contour of the port in which it is to be received, with a small distance between the port contour and the seal-supporting surface. This way, the gap between the inner surface of the port and the seal-supporting surface remains small and only a small sealing portion is required to seal this gap.

A suitable shape of the seal-supporting surface may be, for example, the shape of an outer surface of a ring or of a short a cylinder. Alternatively, its shape could be the shape of a outwardly-tapered annular ridge. Generally, an annular shape appears advantageous, if the port has a circular cross section. An elliptical shape may be advantageous where the port has an elliptical cross section, a hexagonal shape may be advantageous where the port has a hexagonal cross section, etc. Generally, however, the shape of the seal-supporting surface is not determined by the cross section of the port. The seal-supporting surface may, for example, have a rectangular shape, while the port in which it is to be received has a circular cross section. In such cases, the sealing portion may be formed suitably to provide a geometric transition between the seal-supporting surface and the inner port surface, i.e. the surface forming the space in which the port entry device is to be received.

A port entry device according to the second fundamental aspect of this disclosure has a resilient sealing portion for sealing the gap between the structural portion of the port entry device and the port, e.g. an inner surface of the port. The sealing portion is resilient, so that it can conform better to the surface of the port and may compensate changes in the inner port diameter caused, for example, by temperature variations.

In certain embodiments, the sealing portion is rotationally symmetric. In some of those embodiments, the seal-supporting surface has a circular shape, and the contact edge has a circular shape, too, and is arranged concentric with the seal-supporting surface.

In a port entry device according to the second fundamental aspect of the disclosure, the sealing portion is formed as a single piece with the structural portion, i.e. the sealing portion and the structural portion are formed as a single piece. As mentioned above, a benefit of these portions being formed as a single piece is that there is no interface between the sealing portion and the structural portion through which moisture or dust could potentially enter the closure, and that the contact area of the sealing portion to the structural portion can be quite large, so that mechanical forces on the sealing portion can be transmitted to the structural portion with less risk of mechanical failure.

In a port entry device according to the second fundamental aspect of the disclosure, the sealing portion extends in radial direction between the seal-supporting surface and a contact edge, at which contact edge it can sealingly contact the surface of the port. The sealing portion thus extends, from the seal-supporting surface, radially outward, away from the central longitudinal axis of the interior passageway, far enough to be in sealing mechanical contact with the inner surface of the port, when the port entry device is received in the port. The sealing portion extends radially outward up to the contact edge. In certain embodiments of a port entry device according to this second aspect of the disclosure, the seal-supporting surface is a circular or an annular surface, and the contact edge of the sealing portion has a circular shape. Hence, the sealing portion may be a resilient circular membrane having a circular aperture in its centre through which the structural portion extends.

In certain embodiments, a port entry device as described herein further comprises a second resilient sealing portion for sealing the gap between the structural portion and a surface of the port, wherein the second sealing portion is formed as a single piece with the structural portion, is arranged on the seal-supporting surface, spaced from the first resilient sealing portion in an axial direction, and extends radially between the seal-supporting surface and a second contact edge of the second sealing portion. The second contact edge is located radially outward from the seal-supporting surface. At the second contact edge the second sealing portion can sealingly contact the surface of the port.

A port entry device having a second sealing portion with a second contact edge located radially outward from the seal-supporting surface thereby comprises a second sealing element to seal the gap between the structural portion and a surface of the port. A second seal may provide a more effective sealing than a sealing provided by the first sealing portion only, and/or may provide a certain redundancy in case of failure of the first sealing portion.

The second sealing portion may be shaped such that a parallel projection of the second contact edge onto a geometric plane orthogonal to an axial direction has a shape of a circle, an oval, an ellipse, a square, a rectangle, a diamond, a triangle or of a polygon.

The contact edge, i.e. the first and/or the second contact edge, is located radially outward from the seal-supporting surface. In some embodiments according to this second fundamental aspect of the disclosure, the contact edge is located in a first geometric plane. In some embodiments, the seal-supporting surface is located in a second geometric plane. In some embodiments, the contact edge and the seal-supporting surface are arranged in one geometric plane. In other embodiments, they are arranged in different geometric planes, e.g. in parallel geometric planes. Port entry devices according to the second aspect of this disclosure, in which the contact edge is arranged in a geometric plane, may be easier to manufacture. Also, such contact edges may be geometrically shorter, so that sealing between the sealing portion and the port may be more reliable.

Where the contact edge is located in a geometric plane, a surface normal of the plane may be oriented parallel to an axial direction. Alternatively, a surface normal of the geometric plane may form an angle of between 1° and 89° with an axial direction.

In one aspect, the thickness of the sealing portion, i.e. the first and/or the second sealing portion, at the contact edge is smaller than its thickness at the (inner or outer, as the case may be) seal-supporting surface. Such geometries may provide, via the greater thickness at the seal-supporting surface, for a good anchoring of the sealing portion at the structural portion, while providing good conformability to the port surface or cable surface via the smaller thickness at the contact edge.

According to the invention, the thickness of the first sealing portion, decreases from the seal-supporting surface to the contact edge. The sealing portion is thus thicker at the seal-supporting surface and thinner at the contact edge. The thickness may be measured in axial directions. Generally, the thickness of the sealing portion relates to its resilience and elasticity. A thinner contact edge is normally more resilient and can therefore conform better to the cable surface or the port surface, and thereby can provide a better and more reliable seal.

In certain embodiments, the thickness of the sealing portion, i.e. the first or the second sealing portion, decreases continuously from the seal-supporting surface to the contact edge. A sealing portion having a continuously decreasing thickness is generally easy to manufacture and provides good mechanical stability of the sealing portion and conformability at the contact edge.

A parallel projection of the contact edge (i.e. first or second contact edge) onto a geometric plane orthogonal to an axial direction may have a shape of a circle, an oval, an ellipse, a square, a rectangle, a diamond, a triangle, a hexagon, or of a polygon, or may have an irregular shape. As opposed to traditional sealing solutions like O-rings, the fact that the sealing portion is formed as a single piece with the structural portion provides certain freedom of design for the sealing portion and in particular for the contact edge. The contact edge can thus have shapes that are similar to the shapes of the cable or the port, against which it is supposed to seal. Such shapes of the contact edge are beneficial in that they may reduce mechanical stress on the sealing portion, because less deformation may be required to obtain a good seal. Also, if the contact edge corresponds in shape to the shape of the element against which it is supposed to seal, the seal may be more effective.

For example, while many closures have circular port apertures, certain other closures have port apertures that are square or hexagonal in cross section. Sealing against such ports, e.g. inner walls of such ports, will be more effective if the sealing portion has a contact edge which has a square or hexagonal shape corresponding to the shape of the port.

For conformability of the sealing portion to the element against which it is supposed to seal (e.g. a cable, a port), it is not necessary that the contact edge lies in a geometric plane. The shape of the contact edge is rather defined herein via a parallel projection of the contact edge onto a geometric plane orthogonal to an axial direction. Where the contact edge does lie in a geometric plane orthogonal to an axial direction, the parallel projection onto that plane is the cross section of the contact edge.

The rigid structural portion may be formed by, made of, or comprise, a first polymeric material. The first polymeric material may be, for example, ABS (acrylonitrile butadiene styrene), a polycarbonate such as Makrolon, PBT (polybutylene terephthalate), PET (polyethylene terephthalate), or polyamide like, for example PA 6 or PA 6.6.

The first resilient sealing portion and/or the second resilient sealing portion may be formed by, made of, or comprise a second polymeric material. The second polymeric material may be, for example, a thermoplastic elastomer (TPE) or a thermoplastic polyurethane (TPU). By selecting a suitable TPE or TPU, the resilience and softness of a resilient sealing portion can be adapted. A suitable TPE for certain port entry devices may be "Thermolast(R) K", available from Kraiburg, Waldkraiburg, Germany. Suitable TPUs for forming a resilient sealing portion may be, for example, "Desmopan(R)" or "Texin(R)" from Covestro AG, Leverkusen, Germany.

A second resilient sealing portion and the first resilient sealing portion may be formed by, made of, or comprise the same polymeric material. In other words, the second resilient sealing portion may be formed by, made of, or comprise the second polymeric material. Alternatively, the second resilient sealing portion may be formed by, made of, or comprise a third polymeric material. The third polymeric material may be, for example, a TPE or a TPU.

In a further aspect of the present disclosure, the structural portion and the first sealing portion are formed as a single piece by co-molding. Co-molding is a manufacturing method that can provide a sealing portion and a structural portion formed as a single piece. Co-molding can also be referred to as multi-component molding or two-component molding. When manufacturing a port entry device according to the present disclosure, the structural portion may be molded in a first molding step, using a first polymeric material that is rigid after molding. During the same molding cycle, the sealing portion may be molded in a second molding step in a second cavity of the same mold, using a second polymeric material that is resilient after molding. The structural portion, molded in the first step, is still present in the mold when the second molding step is performed, so that the two polymeric materials mix in certain areas and eventually form a single piece which comprises both the structural portion and the sealing portion.

Depending on its geometry, a port entry device according to the present disclosure may be extruded. In that case the structural portion and the sealing portion may be co-extruded. Co-extrusion is a way to form the structural portion and the sealing portion as a single piece. Co-extrusion allows a first material to be used for forming the structural portion such that it is eventually rigid, and a second material to be used for forming the sealing portion such that it is eventually resilient, and the two portions to be formed as a single piece.

In a further aspect of the present disclosure, the port entry device has a first sealing portion for sealing the gap between the structural portion and the cable, according to the first fundamental aspect of the disclosure, and a second sealing portion for sealing the gap between the structural portion and the port, according to the second fundamental aspect of this disclosure. In other words, a port entry device according to the first fundamental aspect of the disclosure as described above may further comprise c) a second seal-supporting surface of the structural portion, and d) a resilient second sealing portion for sealing a gap between the structural portion and a surface of the port, wherein the second sealing portion
- is formed as a single piece with the structural portion,
- is arranged on the second seal-supporting surface of the structural portion,
- extends radially between the second seal-supporting surface and a second contact edge of the second sealing portion, located radially outward from the second seal-supporting surface, at which second contact edge the second sealing portion can sealingly contact the surface of the port. The thickness of the second sealing portion may decrease from the second seal-supporting surface to the second contact edge.

A port entry device according to this aspect of the disclosure may be easier to assemble than traditional port entry devices, and may provide a more reliable sealing, because both the sealing towards the cable and the sealing towards the port is done with respective single-piece sealing portions, and the sealing towards the cable employs a tapered sealing portion.

In the port entry devices described herein, the resilient second sealing portion (towards the port) may be made from the same material, e.g. polymeric material, as the resilient first sealing portion (towards the cable). In other words, the second sealing portion and the first sealing portion may be made from the same material. This may make the port entry device more cost-effective to manufacture.

Alternatively, the second sealing portion (towards the port) may be made from a different material, e.g. a different polymeric material, than the first sealing portion. This may be advantageous where the - mechanical or chemical - surface properties of the cable require certain properties of the first sealing portion, while the mechanical or chemical surface properties of the port and its surfaces require different properties of the second sealing portion, which are not compatible. Using different materials may thus make the port entry device more fit for specific uses.

In an aspect of the present disclosure, the port entry device as described herein is suitable for mounting on an optical telecommunication cable and comprises a standardized optical connector for mating with an optical coupling in the closure. Standardized optical connectors are connectors which comply with published industry standards such as ISO or ANSI standards. A standardized optical connector may be, for example, an LC or an SC connector, an MT connector, ST connector, FT connector or an MPO connector. NPC connectors, TLC connectors and Crimplok(TM) connectors available from 3M Company, St. Paul, Minnesota, U.S.A., are also considered standardized optical connectors.

A port entry device comprising an optical connector provides added functionality in that it not only provides entry of the cable, but also connectivity of the cable. The installation of a separate connector on the cable may not be required. Such a port entry device may thus save an installation step and make installation quicker and more cost-effective.

The present disclosure will now be described in more detail with reference to the following Figures exemplifying particular embodiments of the disclosure. Like elements are provided with the same reference numbers.
- Fig. 1: Top view of a port entry device according to the prior art;
- Fig. 2: Sectional view of a first port entry device according to the present disclosure, mounted on a cable and partially inserted into a port of a closure;
- Fig. 3: Sectional view of a second port entry device according to the present disclosure, mounted on a cable;
- Fig. 4: Perspective sectional view of a third port entry device according to the present disclosure;
- Fig. 5: Sectional view of a fourth port entry device according to the present disclosure, mounted on a cable; and
- Fig. 6: Sectional view of a fifth port entry device according the present disclosure.

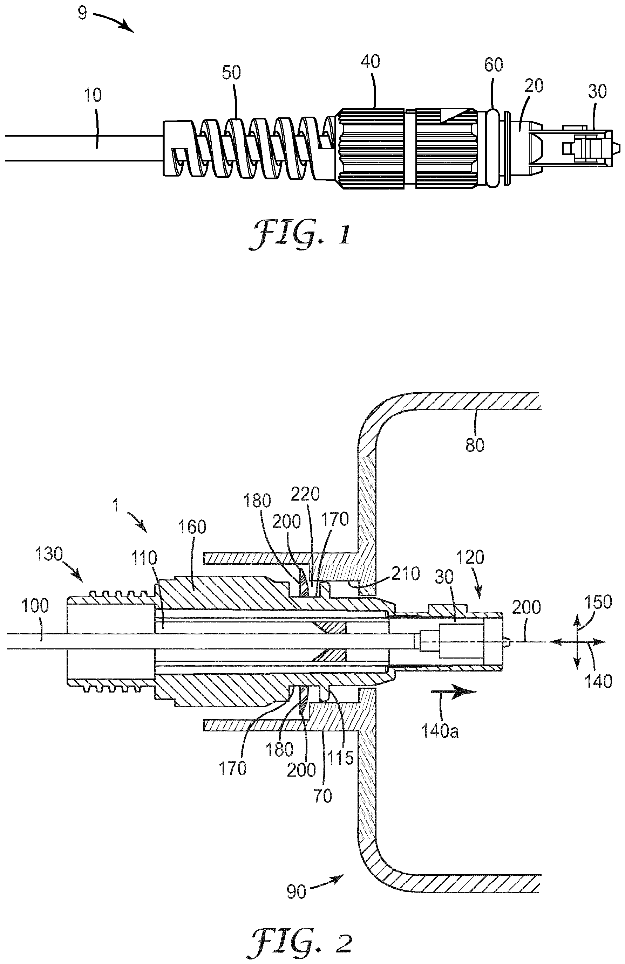

The top view of **Figure 1** shows a traditional fibre-optic port entry device 9 of the prior art. It is mounted on a fibre-optic cable 10 and facilitates sealed entry of the cable 10 into a closure. The fibre-optic port entry device 9 comprises a structural portion 20, an optical connection portion 30 and a cable securement portion 40, which includes a spiral trunk 50 for preventing excessive bending of the cable 10. The port entry device 9 is designed to be inserted, connection portion 30 first, into a port of a telecommunication closure, whereby the cable 10 enters the closure, and the connection portion 30 at the end of the cable 10 engages with an optical coupling in the closure.

In the traditional port entry device 9 of Figure 1, a rubber O-ring 60 is to provide sealing of a gap between the structural portion 20 and the walls of the port, in order to prevent dust, moisture or bugs from entering the closure. The O-ring 60 is a separate piece from the structural portion 20.

**Figure 2** illustrates, in a schematic sectional view, a first port entry device 1 according to the present disclosure, incompletely inserted into a port 70 in an outer wall 80 of a closure 90. The port entry device 1 is mounted on a fibre-optic telecommunication cable 100 and facilitates a sealed entry of the cable 100 through the port 70 into the closure 90. The port entry device 1 comprises an abutment ring 115, which limits insertion of the port entry device 1 into the port 70 in the insertion direction indicated by arrow 140a.

The port entry device 1 forms an elongate passageway 110, which receives a section of the cable 100 and extends longitudinally between a first end portion 120 and a second end portion 130 of the port entry device 1. The first end portion 120 comprises an optical connection portion 30, by which an optical fibre in the cable 100 can be optically connected, via an optical coupling (not shown) in the closure 90, to a further optical fibre, so that optical communication signals can be transmitted from the fibre of cable 100 into the further fibre.

The long extension of the passageway 110 defines axial directions, indicated by arrow 140. Radial directions, indicated by arrows 150, are directions orthogonal to the axial directions 140. The port entry device 1 is axially symmetric with respect to its central axis 200, except for the connection portion 30.

The port entry device 1 has a structural portion 160, which forms a main body of the port entry device 1. It is rigid and thereby provides mechanical stability to the entire port entry device 1, so that the port entry device 1 can be manually gripped for insertion into the port 70 or retraction from the port 70. Also, the structural portion 160 provides support for further elements of the port entry device 1. The structural portion 160 is made from ABS (acrylonitrile butadiene styrene), a thermoplastic polymeric material.

The structural portion 160 of the port entry device 1 has an outer, i.e. radially outer, seal-supporting surface 170, which forms part of the outer surface of the port entry device 1. A sealing portion 180 is arranged on the seal-supporting surface 170. The sealing portion 180 forms an annular seal, arranged around the circumference of the structural portion 160. It extends, in radial directions 150, between the seal-supporting surface 170 and a contact edge 200 of the sealing portion 180.

The thickness of the sealing portion 180, measured in axial directions 140, decreases linearly and continuously from the seal-supporting surface 170 to the contact edge 200. Therefore, in the sectional view of Figure 2, the sealing portion 180 has a generally triangular profile, where the base of the triangle is located on the seal-supporting surface 170, and the outer tip of the triangle is the contact edge 200, which is arranged radially outward from the seal-supporting surface 170.

At its contact edge 200, the sealing portion 180 can sealingly contact an inner surface 210 of the port 70. The sealing portion 180 thereby seals the gap 220 between the structural portion 160 of the port entry device 1 and the inner surface 210 of the port 70. Before the port entry device 1 is inserted into the port 70, the outer diameter of the sealing portion 180 is slightly larger than the inner diameter of the port 70. However, in order to provide efficient sealing, the sealing portion 180 is resilient, so that it can be elastically deformed and thereby conform to the inner surface 210 of the port 70, when the port entry device 1 is fully inserted into the port 70.

The sealing portion 180 is formed as a single piece with the structural portion 160: In manufacturing of the port entry device 1, the sealing portion 180 is co-molded with the structural portion 160. Hence these portions of the port entry device 1 never existed separately from each other. Due to the absence of a mechanical separation between the structural portion 160 and the sealing portion 180, there is no need to provide a separate seal between these portions. Because the structural portion 160 and the sealing portion 180 are formed as a single piece, no moisture, dust or bugs can penetrate via any path between them into the closure 90.

In the embodiment shown in Figure 2 the contact edge 180 forms a ring and hence lies in one geometric plane. The plane is orthogonal to axial directions 140, i.e. its surface normal is oriented parallel to the axial directions 140.

Figure 2 illustrates how a port entry device 1 according to the second fundamental aspect of the present disclosure provides sealing between its outer surface and a surface of the port 70. Hence no interior elements of the port entry device 1 are shown, and no details about how sealing against the cable 100 can be achieved are described. Such details can be found in the description of other Figures below.

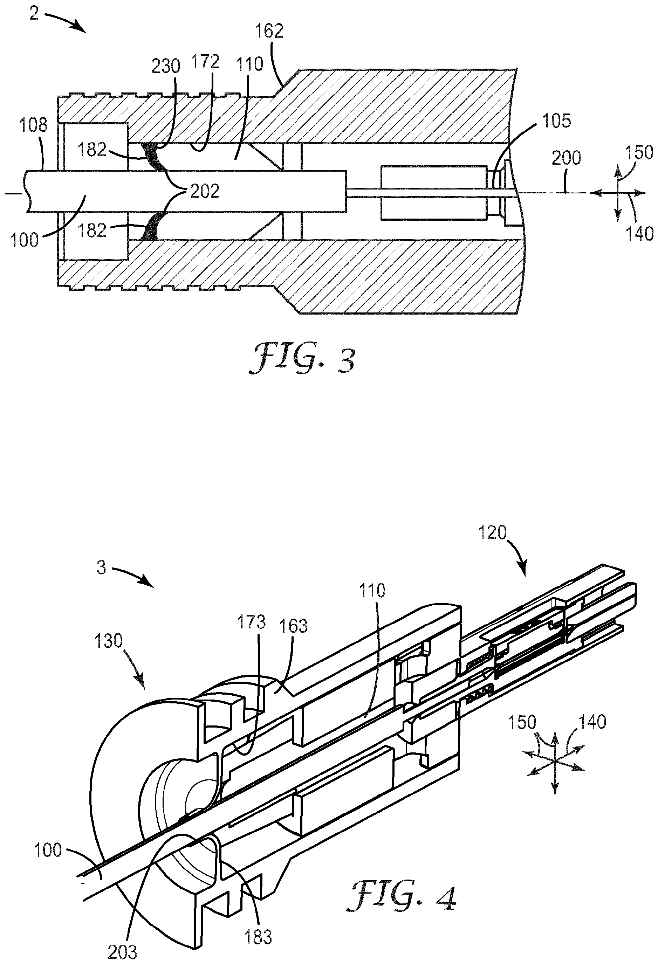

**Figure 3** illustrates elements of a second port entry device 2 according to an aspect of the present disclosure in a schematic sectional view. This port entry device 2 is mounted on a fibre-optic telecommunication cable 100 and is designed to be received in a port of a closure, such as the port 70 and the closure 90 shown in Figure 2. The cable 100 is supposed to enter a closure (not shown) so that an optical fibre 105 in the cable 100 can be optically connected to another fibre in the closure. The port entry device 2 facilitates a sealed entry of the cable 100 into the closure. Figure 2 illustrates sealing between the port entry device 2 and the cable 100, and therefore omits any elements that do not matter in this context.

The second port entry device 2 forms an elongate interior passageway 110, which receives a section of the cable 100. The passageway 110 extends longitudinally in the direction of symmetry axis 200, i.e. in axial directions 140. Radial directions 150 again are directions orthogonal to axial directions 140.

The port entry device 2 has a rigid structural portion 162 which comprises a radially inner seal-supporting surface 172. The seal-supporting surface 172 delimits a portion of the interior passageway 110.

The port entry device 2 further comprises a sealing portion 182, which is arranged on the inner seal-supporting surface 172. The sealing portion 182 is resilient, so that it can be elastically deformed, which allows it to conform to an outer surface 108 of the cable 100. A base 230 of the sealing portion 182 is arranged on the inner seal-supporting surface 172. At its opposite end, the sealing portion 182 comprises a contact edge 202, which is located radially inward from the seal-supporting surface 172. At the contact edge 202, the sealing portion 182 can sealingly contact the outer surface 108 of the cable 100 and thereby seal a gap, formed by the remaining free diameter of the interior passageway 110, between the structural portion 162 and the outer surface 108 of the cable 100.

The sealing portion 182 extends in radial directions 150 between the inner seal-supporting surface 172 and the contact edge 202. It forms a resilient circular membrane with a central aperture, which is thicker at its outer perimeter, where it is arranged on the inner seal-supporting surface 172, and thinner at its inner perimeter, formed by the contact edge 202. A parallel projection of the contact edge 202 onto a geometric plane orthogonal to an axial direction 140 has the shape of a circle.

The thickness of the sealing portion 182 is measured in axial directions 140. It decreases continuously from the inner seal-supporting surface 172 to the contact edge 202.

The sealing portion 182 is formed as a single piece with the structural portion 162: However, the rigid structural portion 162 is molded using a first polymeric material, namely ABS, while the resilient sealing portion 182 is co-molded using a second, different polymeric material, a thermoplastic polyurethane. When manufacturing the port entry device 2, the sealing portion 182 is co-molded with the structural portion 162. Hence these portions 162, 182 of the port entry device 2 never existed separately from each other. Due to this absence of a mechanical separation between the structural portion 162 and the sealing portion 182, there is no need to provide a separate seal between these portions. Because the structural portion 162 and the sealing portion 182 are formed as a single piece, no moisture, dust or bugs can penetrate via any path between them into the closure.

A third port entry device 3 according to the disclosure is schematically illustrated in **Figure 4****,** in a perspective sectional view. Although its shape is different, it is functionally similar to the second port entry device 2. A section of a cable 100 is received in an interior passageway 110, formed by a rigid structural portion 163. The structural portion 163 has an inner seal-supporting surface 173, on which a resilient sealing portion 183 is arranged, which is co-molded with the structural portion 163 to form a single piece. The resilient sealing portion 183 extends radially from the inner seal-supporting surface 173 to a contact edge 203 of the sealing portion 183, which sealingly contacts the outer surface of the cable 100. The sealing portion 183 is resilient enough to allow for some axial movement of the cable 100 relative to the structural portion 163 while still providing sealing of the gap between the structural portion 163 and the cable surface. Figure 4 shows that the thickness of the sealing portion 183, as measured in axial directions 140, is greater at the inner seal-supporting surface 173 and smaller at the contact edge 203, and continuously decreases when going from the inner seal-supporting surface 173 to the contact edge 203.

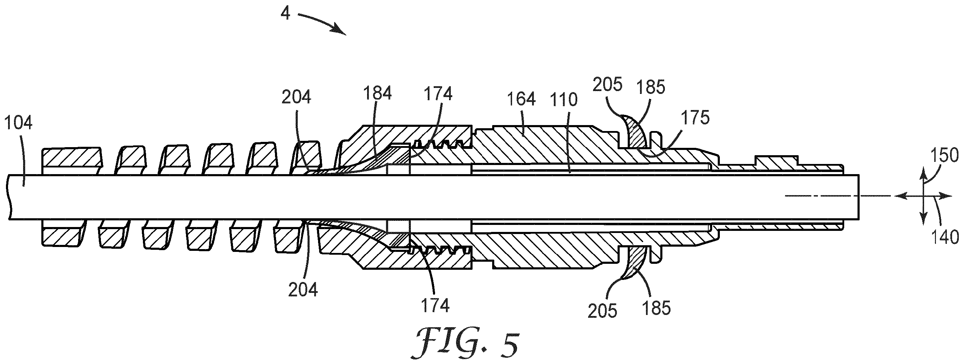

A further, fourth port entry device 4 according to the present disclosure is schematically shown, in a sectional view, in **Figure 5****.** It combines sealing against the port as shown in Figure 2 with sealing against the cable shown in Figures 3 and 4.

The fourth port entry device 4 is axially symmetric and is shown mounted on a copper telecommunication cable 104. On one end, it has a spiral trunk to protect the cable 104 against excessive bending. The opposite end can be inserted into a port of a closure, such as the port 70 and the closure 90 shown in Figure 2, to facilitate sealed entry of the cable 104 into the closure. The port entry device 4 forms an elongate interior passageway 110 for receiving the cable 104. The passageway 110 defines axial directions 140 and radial directions 150 orthogonal thereto. The port entry device 4 comprises a rigid structural portion 164, which has a first seal-supporting surface 174 and a second seal-supporting surface 175.

On the first seal-supporting surface 174, a resilient first sealing portion 184, co-molded with the structural portion 164 to form a single piece, is arranged and extends radially between the first seal-supporting surface 174 and a contact edge 204, located radially inward from the first seal-supporting surface 174. In Figure 5, like in the other Figures, the rigid structural portion 164 and the resilient sealing portions 184, 185 are drawn in different texture, although they are formed as a single piece. This is done to visualize the difference in materials and properties (rigid vs. resilient) and shall not be construed as to indicate separate elements.

The thickness of the resilient first sealing portion 184 decreases from the first seal-supporting surface 174 to the contact edge 204, so that the sealing portion 184 is thicker where it is close to the seal-supporting surface 174, and thinner close to the contact edge 204. This tapering helps ensure a strong anchoring to the first seal-supporting surface 174 and a good conformability to the cable 104 at the contact edge 204.

While the first sealing portion 184 provides for sealing a gap between the structural portion 164 and the outer surface of the cable 104, a resilient second sealing portion 185 can seal a gap between the structural portion 164 and a surface of a port, into which the fourth port entry device 4 can be inserted in axial directions 140. On the second seal-supporting surface 175, the second sealing portion 185, co-molded with the structural portion 164, is arranged and extends radially between the first seal-supporting surface 175 and a contact edge 205, located radially outward from the second seal-supporting surface 175. Also the thickness of the second sealing portion 185 decreases from the second seal-supporting surface 175 to the contact edge 205, so that the sealing portion 185 is thicker where it is close to the seal-supporting surface 175, and thinner close to the contact edge 205. Again, this tapered profile helps ensure a strong anchoring to the second seal-supporting surface 175 and a good conformability to an inner surface of a port, like for example port 70 in Figure 2, at the contact edge 205.

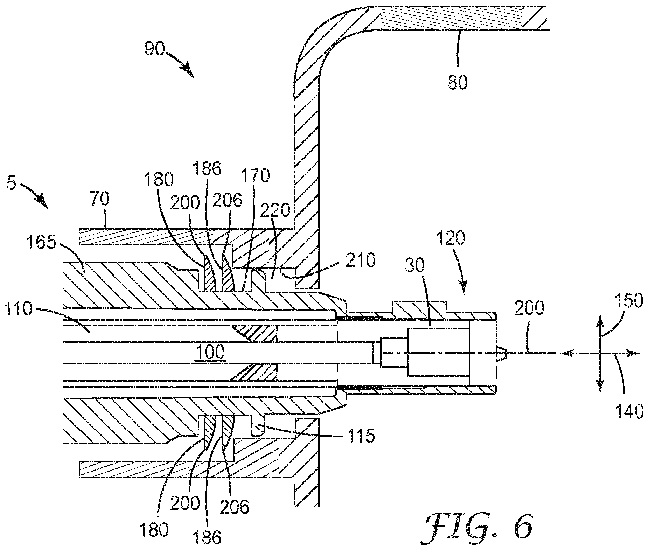

**Figure 6** is, in an sectional view, an illustration of a section of a fifth port entry device 5, incompletely inserted into a port 70 in a wall 80 of a closure 90. The fifth port entry device 5 is identical to the first port entry device 1 of Figure 2, except that it has two resilient sealing portions: The first sealing portion 180, and a second sealing portion 186, which are both for sealing the gap 220 between the rigid structural portion 165 and the inner surface 210 of the port 70. The second sealing portion 186 is also co-molded with the structural portion 165 and thus formed as a single piece with it. The second sealing portion 186 is arranged on the seal-supporting surface 170 on which also the first sealing portion 180 is arranged, and is spaced from the first sealing portion 180 in an axial direction 140. The second sealing portion 186 also has a contact edge, namely the second contact edge 206, located radially outward from the seal-supporting surface 170, at which second contact edge 206 the second sealing portion 186 sealingly contacts the surface 210 of the port 70, when the port entry device 6 is fully inserted into the port. When fully inserted, both sealing portions 180, 186 sealingly contact the surface 210 of the port 70. This double seal seals more reliably than a single seal.

## Claims

1. Port entry device (2, 3, 4) for mounting on a telecommunication cable (100, 104) and adapted to be received in a port (70) of a closure (90), to facilitate sealed entry of the cable through the port into the closure,
the port entry device forming an elongate interior passageway (110) for receiving a section of the cable,
the passageway extending longitudinally in an axial direction (140) between a first end portion (120) of the port entry device and a second end portion (130) of the port entry device, with radial directions (150) being directions orthogonal to the axial direction,
wherein the port entry device comprises
a) a rigid structural portion (162, 163, 164) having a seal-supporting surface (172, 173, 174), and
b) a resilient first sealing portion (182, 183, 184) for sealing a gap between the structural portion and a surface (108) of the cable,
- arranged on the seal-supporting surface of the structural portion,
- extending radially between the seal-supporting surface and a contact edge (202, 203, 204) of the first sealing portion, located radially inward from the seal-supporting surface, at which contact edge the first sealing portion can sealingly contact the surface of the cable,
**characterized in that** the rigid structural portion (162, 163, 164) and the resilient first sealing portion (182, 183, 184) are formed as a single piece and the thickness of the first sealing portion decreases from the seal-supporting surface to the contact edge.

2. Port entry device according to claim 1, wherein the seal-supporting surface (172, 173) is an inner surface of the structural portion, facing the interior passageway (110).

3. Port entry device according to claim 1, wherein the seal-supporting surface (174) is flat and its surface normal is oriented parallel to axial directions (140).

4. Port entry device according to any one of the preceding claims, wherein the contact edge (200, 202, 203, 204) lies in a geometric plane.

5. Port entry device according to claim 4, wherein a surface normal of the geometric plane is oriented parallel to an axial direction (140).

6. Port entry device according to any one of the preceding claims, wherein the thickness of the first sealing portion (180, 182, 183, 184) decreases continuously from the seal-supporting surface (170, 172, 173, 174) to the contact edge (200, 202, 203, 204).

7. Port entry device according to any one of the preceding claims, wherein a parallel projection of the contact edge (200, 202, 203, 204) onto a geometric plane orthogonal to an axial direction (140) has a shape of a circle, an oval, an ellipse, a square, a rectangle, a diamond, a triangle, or of a polygon.

8. Port entry device according to any one of the preceding claims, wherein the structural portion (160, 162, 163, 164) is formed by a first polymeric material, and wherein the first sealing portion (180, 182, 183, 184) is formed by a second polymeric material.

9. Port entry device according to any one of the preceding claims, wherein the structural portion (160, 162, 163, 164) and the first sealing portion (180, 182, 183, 184) are formed by co-molding.

10. Port entry device (4) according to claim 1, further comprising
c) a second seal-supporting surface (175) of the structural portion (164), and
d) a resilient second sealing portion (185) for sealing a gap between the structural portion and a surface (210) of the port (70),
wherein the second sealing portion
- is formed as a single piece with the structural portion,
- is arranged on the second seal-supporting surface of the structural portion,
- extends radially between the second seal-supporting surface and a second contact edge (205) of the second sealing portion, located radially outward from the second seal-supporting surface, at which second contact edge the second sealing portion can sealingly contact the surface of the port,
wherein the thickness of the second sealing portion decreases from the second seal-supporting surface to the second contact edge.

11. Port entry device (4) according to claim 10, wherein the second sealing portion
(185) is made from a different material than the first sealing portion (184).

12. Port entry device (4) according to claim 10, wherein the second sealing portion (185) and the first sealing portion (184) are made from the same material.

13. Port entry device (1 , 2, 3, 4) according to any one of the preceding claims, for mounting on an optical telecommunication cable (100), comprising a standardized optical connector, such as an LC or SC connector, for mating with an optical coupling in the closure (90).

## Patentansprüche

1. Kabeleinführungsvorrichtung (2, 3, 4) zur Anbringung an einem Telekommunikationskabel (100, 104) und geeignet, um in einer Einführöffnung (70) einer Muffe (90) aufgenommen zu werden, um die abgedichtete Einführung des Kabels durch die Einführöffnung in die Muffe zu ermöglichen,
wobei die Kabeleinführungsvorrichtung einen länglichen Innendurchgang (110) zur Aufnahme eines Abschnitts des Kabels bildet,
wobei der Durchgang sich längs in einer Axialrichtung (140) zwischen einem ersten Endteil (120) der Kabeleinführungsvorrichtung und einem zweiten Endteil (130) der Kabeleinführungsvorrichtung erstreckt, wobei radiale Richtungen (150) zu der Axialrichtung orthogonale Richtungen sind,
bei der die Kabeleinführungsvorrichtung Folgendes aufweist:
a) einen starren Konstruktionsteil (162, 163, 164), der eine Dichtungsträgerfläche (172, 173, 174) hat, und
b) einen nachgiebigen ersten Dichtungsteil (182, 183, 184) zum Abdichten eines Spalts zwischen dem Konstruktionsteil und einer Oberfläche (108) des Kabels, der
- an der Dichtungsträgerfläche des Konstruktionsteils angeordnet ist,
- sich radial zwischen der Dichtungsträgerfläche und einer Kontaktkante (202, 203, 204) des ersten Dichtungsteils, die radial einwärts der Dichtungsträgerfläche liegt, erstreckt, wobei an dieser Kontaktkante der erste Dichtungsteil mit der Oberfläche des Kabels abdichtend in Kontakt sein kann,
**dadurch gekennzeichnet, dass** der starre Konstruktionsteil (162, 163, 164) und der nachgiebige erste Dichtungsteil (182, 183, 184) einstückig ausgebildet sind und die Dicke des ersten Dichtungsteils von der Dichtungsträgerfläche zu der Kontaktkante abnimmt.

2. Kabeleinführungsvorrichtung nach Anspruch 1, wobei die Dichtungsträgerfläche (172, 173) eine Innenfläche des Konstruktionsteils ist, die dem Innendurchgang (110) gegenüberliegt.

3. Kabeleinführungsvorrichtung nach Anspruch 1, wobei die Dichtungsträgerfläche (174) flach ist und ihr Normalenvektor parallel zu Axialrichtungen (140) ausgerichtet ist.

4. Kabeleinführungsvorrichtung nach einem der vorhergehenden Ansprüche, wobei die Kontaktkante (200, 202, 203, 204) in einer geometrischen Ebene liegt.

5. Kabeleinführungsvorrichtung nach Anspruch 4, wobei ein Normalenvektor der geometrischen Ebene parallel zu einer Axialrichtung (140) ausgerichtet ist.

6. Kabeleinführungsvorrichtung nach einem der vorhergehenden Ansprüche, wobei die Dicke des ersten Dichtungsteils (180, 182, 183, 184) von der Dichtungsträgerfläche (170, 172, 173, 174) zu der Kontaktkante (200, 202, 203, 204) kontinuierlich abnimmt.

7. Kabeleinführungsvorrichtung nach einem der vorhergehenden Ansprüche, wobei ein paralleler Vorsprung der Kontaktkante (200, 202, 203, 204) auf eine geometrische Ebene orthogonal zu einer Axialrichtung (140) eine Form eines Kreises, eines Ovals, einer Ellipse, eines Quadrats, eines Rechtecks, einer Raute, eines Dreiecks oder eines Vielecks hat.

8. Kabeleinführungsvorrichtung nach einem der vorhergehenden Ansprüche, wobei der Konstruktionsteil (160, 162, 163, 164) von einem ersten polymeren Material gebildet wird und wobei der erste Dichtungsteil (180, 182, 183, 184) von einem zweiten polymeren Material gebildet wird.

9. Kabeleinführungsvorrichtung nach einem der vorhergehenden Ansprüche, wobei der Konstruktionsteil (160, 162, 163, 164) und der erste Dichtungsteil (180, 182, 183, 184) im Co-Moulding-Verfahren hergestellt sind.

10. Kabeleinführungsvorrichtung (4) nach Anspruch 1, die ferner Folgendes aufweist:
c) eine zweite Dichtungsträgerfläche (175) des Konstruktionsteils (164) und
d) einen nachgiebigen zweiten Dichtungsteil (185) zur Abdichtung eines Spalts zwischen dem Konstruktionsteil und einer Oberfläche (210) der Einführungsöffnung (70),
wobei der zweite Dichtungsteil
- mit dem Konstruktionsteil einteilig ausgebildet ist,
- auf der zweiten Dichtungsträgerfläche des Konstruktionsteils angeordnet ist,
- sich radial zwischen der zweiten Dichtungsträgerfläche und einer zweiten Kontaktkante (205) des zweiten Dichtungsteils erstreckt, die radial außerhalb der zweiten Dichtungsträgerfläche liegt, wobei der zweite Dichtungsteil an dieser zweiten Kontaktkante abdichtend mit der Oberfläche der Einführungsöffnung in Kontakt sein kann,
wobei die Dicke des zweiten Dichtungsteils von der zweiten Dichtungsträgerfläche zu der zweiten Kontaktkante abnimmt.

11. Kabeleinführungsvorrichtung (4) nach Anspruch 10, wobei der zweite Dichtungsteil (185) aus einem anderen Material als der erste Dichtungsteil (184) hergestellt ist.

12. Kabeleinführungsvorrichtung (4) nach Anspruch 10, wobei der zweite Dichtungsteil (185) und der erste Dichtungsteil (184) aus dem gleichen Material hergestellt sind.

13. Kabeleinführungsvorrichtung (1, 2, 3, 4) nach einem der vorhergehenden Ansprüche zur Anbringung an einem Lichtwellenleiter-Telekommunikationskabel (100), das einen normierten Lichtwellenleiterverbinder, wie einen LC- oder SC-Verbinder, zum Zusammenpassen mit einem Lichtwellenleiteranschluss in der Muffe (90) aufweist.

## Revendications

1. Dispositif d'entrée d'orifice (2, 3, 4) pour montage sur un câble de télécommunication (100, 104) et adapté pour être reçu dans un orifice (70) d'une fermeture (90), afin de faciliter l'entrée scellée du câble dans la fermeture à travers l'orifice,
le dispositif d'entrée d'orifice formant un passage intérieur allongé (110) pour recevoir une section du câble,
le passage s'étendant longitudinalement dans une direction axiale (140) entre une première partie d'extrémité (120) du dispositif d'entrée d'orifice et une deuxième partie d'extrémité (130) du dispositif d'entrée d'orifice, avec des directions radiales (150) étant des directions orthogonales à la direction axiale,
où le dispositif d'entrée d'orifice comprend
a) une partie structurelle rigide (162, 163, 164) ayant une surface d'appui de joint d'étanchéité (172, 173, 174), et
b) une première partie de scellement résiliente (182, 183, 184) pour sceller un espace entre la partie structurelle et une surface (108) du câble,
- arrangée sur la surface d'appui de joint d'étanchéité de la partie structurelle,
- s'étendant radialement entre la surface d'appui de joint d'étanchéité et un bord de contact (202, 203, 204) de la première partie de scellement, situé radialement vers l'intérieur de la surface d'appui de joint d'étanchéité, auquel bord de contact la première partie de scellement peut entrer en contact de manière hermétique avec la surface du câble, **caractérisé en ce que** la partie structurelle rigide (162, 163, 164) et la première partie de scellement résiliente (182, 183, 184) sont formées en une seule pièce et l'épaisseur de la première partie de scellement diminue de la surface d'appui de joint d'étanchéité au bord de contact.

2. Dispositif d'entrée d'orifice selon la revendication 1, dans lequel la surface d'appui de joint d'étanchéité (172, 173) est une surface interne de la partie structurelle, faisant face au passage intérieur (110).

3. Dispositif d'entré d'orifice selon la revendication 1, dans lequel la surface d'appui de joint d'étanchéité (174) est plate et sa surface perpendiculaire est orientée parallèle aux directions axiales (140).

4. Dispositif d'entrée d'orifice selon l'une quelconque des revendications précédentes, dans lequel le bord de contact (200, 202, 203, 204) est disposé dans un plan géométrique,

5. Dispositif d'entrée d'orifice selon la revendication 4, dans lequel une surface perpendiculaire du plan géométrique est orientée parallèle à une direction axiale (140).

6. Dispositif d'entrée d'orifice selon l'une quelconque des revendications précédentes, dans lequel l'épaisseur de la première partie de scellement (180, 182, 183, 184) diminue continuellement de la surface d'appui de joint d'étanchéité (170, 172, 173, 174) au bord de contact (200, 202, 203, 204).

7. Dispositif d'entrée d'orifice selon l'une quelconque des revendications précédentes, dans lequel une projection parallèle du bord de contact (200, 202, 203, 204) sur un plan géométrique orthogonal à une direction axiale (140) a une forme d'un cercle, d'un ovale, d'une ellipse, d'un carré, d'un rectangle, d'un losange, d'un triangle ou d'un polygone.

8. Dispositif d'entrée d'orifice selon l'une quelconque des revendications précédentes, dans lequel la partie structurelle (160, 162, 163, 164) est formée par un premier matériau polymère, et dans lequel la première partie de scellement (180, 182, 183, 184) est formée par un deuxième matériau polymère.

9. Dispositif d'entrée d'orifice selon l'une quelconque des revendications précédentes, dans lequel la partie structurelle (160, 162, 163, 164) et la première partie de scellement (180, 182, 183, 184) sont formées par moulage par co-injection.

10. Dispositif d'entrée d'orifice (4) selon la revendication 1, comprenant en outre
c) une deuxième surface d'appui de joint d'étanchéité (175) de la partie structurelle (164), et
d) une deuxième partie de scellement résiliente (185) pour sceller un espace entre la partie structurelle et une surface (210) de l'orifice (70),
dans lequel la deuxième partie de scellement
- est formée en une seule pièce avec la partie structurelle,
- est arrangée sur la deuxième surface d'appui de joint d'étanchéité de la partie structurelle,
- s'étend radialement entre la deuxième surface d'appui de joint d'étanchéité et un deuxième bord de contact (205) de la deuxième partie de scellement, situé radialement vers l'extérieur de la deuxième surface d'appui de joint d'étanchéité, auquel deuxième bord de contact la deuxième partie de scellement peut entrer en contact de manière hermétique avec la surface de l'orifice,
dans lequel l'épaisseur de la deuxième partie de scellement diminue de la deuxième surface d'appui de joint d'étanchéité au deuxième bord de contact.

11. Dispositif d'entrée d'orifice (4) selon la revendication 10, dans lequel la deuxième partie de scellement (185) est fabriquée en un matériau différent de celui de la première partie de scellement (184).

12. Dispositif d'entrée d'orifice (4) selon la revendication 10, dans lequel la deuxième partie de scellement (185) et la première partie de scellement (184) sont fabriquées en le même matériau.

13. Dispositif d'entrée d'orifice (1, 2, 3, 4) selon l'une quelconque des revendications précédentes, à monter sur un câble de télécommunication optique (100), comprenant un connecteur optique normalisé, tel qu'un connecteur LC ou SC, pour s'accoupler avec un couplage optique dans la fermeture (90).
